# EUROPEAN PATENT APPLICATION

(11) **EP 4 195 754 A1**
(43) Date of publication of application: **14.06.2023**
(21) Application number: 21853695.1
(22) Date of filing: 29.07.2021
(51) Int. Cl.: H04W 24/08, H04W 8/18

(54) **SUBSCRIPTION AND PROCESSING METHOD, NETWORK DATA ANALYSIS FUNCTION, AND STORAGE MEDIUM**

(30) Priority: 06.08.2020 CN 202010783271; 15.01.2021 CN 202110053612
(71) Applicant: Datang Mobile Communications Equipment Co., Ltd., Beijing 100085 (CN)
(72) Inventor: WANG, Hucheng, Beijing 100085 (CN)
(74) Representative: dompatent von Kreisler Selting Werner - Partnerschaft von Patent- und Rechtsanwälten mbB
(86) International application number: PCT/CN2021/109228
(87) International publication number: WO 2022/028302

(57) **Abstract**

The present disclosure provides a subscription and processing method, an NWDAF, and a storage medium. The method includes: sending, by a aggregator NWDAF, a subscription request to an NWDAF1, the NWDAF1 being an NWDAF whose serving area covers a current location of a UE; upon the receipt of a notification that the UE has moved out of the serving area of the NWDAF1, determining, by the aggregator NWDAF, a 5GC network function currently serving the UE and determining an NWDAF2 which is capable of serving the 5GC network function, or determining a location of the UE and querying the NWDAF2 which is capable of serving the UE in accordance with the location of the UE; and sending, by the aggregator NWDAF, a subscription request to the NWDAF2.

## Description

### CROSS-REFERENCE TO RELATED APPLICATION

This application claims priorities of the Chinese patent application No. 202010783271.4 filed on August 6, 2020 and the Chinese patent application No. 202110053612.7 filed on January 15, 2021, both of which are incorporated by reference herein.

### TECHNICAL FIELD

The present disclosure relates to the field of wireless communication technology, in particular to a subscription and processing method, a Network Data Analytic Function (NWDAF), and a storage medium.

### BACKGROUND

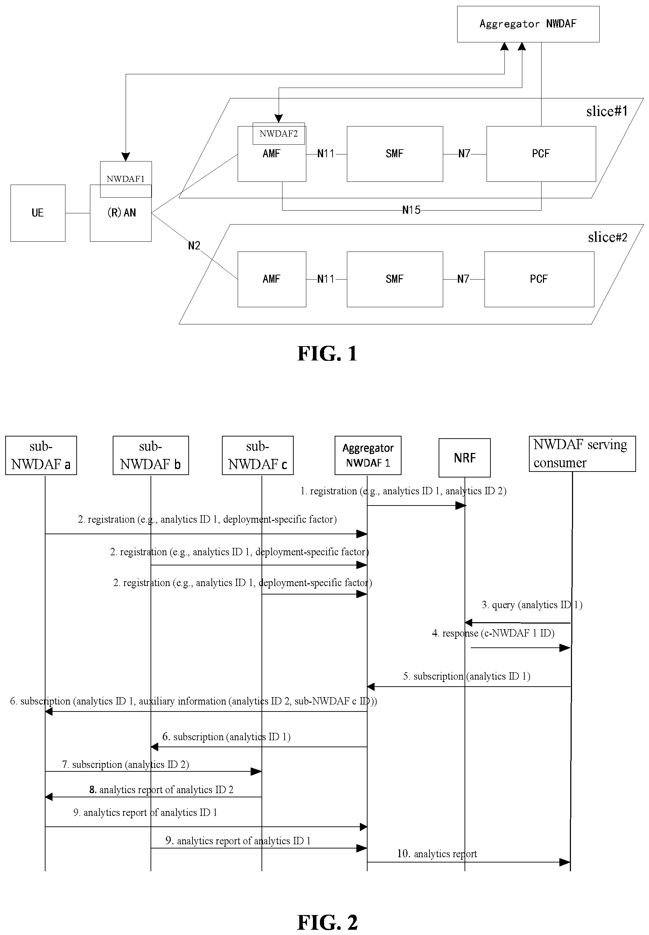

FIG. 1 is a schematic view showing network architecture supporting a hierarchical NWDAF. As shown in FIG. 1, the NWDAF, as a network analytic function managed by an operator, provides a data analytics server for a 5^{th}-Generation (5G) core network (5GC) network function, an Application Function (AF) and an Operation, Administration and Maintenance (OAM), and an analytic result is historical statistical information or prediction information. The NWDAF serves one or more network slices. In a 5G network, the NWDAF is individually deployed in a server room of the operator as a aggregator NWDAF, or deployed together with some 5G network functions as a distributed NWDAF. FIG. 1 shows an architecture instance of two levels of NAWDAFs.

In the 5G network supporting a plurality of NWDAFs in FIG. 1, different NWDAF instances provide different data analytics. For example, the aggregator NWDAF provides non-real-time data analytics, and a distributed NWDAF provides real-time data analytics. In order to enable a consumer Network Function (NF) to find an appropriate NWDAF instance to provide analytics about a specific type, the NWDAF instance needs to provide a supported analytic Identifier (ID) when it is registered with a Network Repository Function (NRF), and the analytic ID represents an analytics type. In this way, the consumer NF provides the analytic ID to indicate the required analytics type when it queries an NWDAF instance to the NRF.

FIG. 2 is a flow chart of a multi-NWDAF coordinate procedure based on information registration. As shown in FIG. 2, in multi-NWDAF coordinate architecture, a sub-NWDAF serves a specific analytic ID or it is deployed together with some NFs. The sub-NWDAF needs to be registered with the aggregator NWDAF, so as to provide the supported analytic ID and deployment-related factors.

When the consumer NF requests for analytics about a specific type, it at first searches for the aggregator NWDAF through the NRF, and then the aggregator NWDAF determines the sub-NWDAFs for providing the data analytics in accordance with registration information about the sub-NWDAFs, e.g., determines a target sub-NWDAF in accordance with serving areas of the sub-NWDAFs. The aggregator NWDAF requests a data analytics result from a designated sub-NWDAF. The aggregator NWDAF may also transmit an ID of the other cooperative sub-NWDAF to the designated sub-NWDAF. In this way, the designated sub-NWDAF may cooperate with the other sub-NWDAF to generate a final analytics result.

A drawback in the related art lies in that there is an unnecessary system overhead when the aggregator NWDAF cooperates with a plurality of NWDAFs.

### SUMMARY

An object of the present disclosure is to provide a subscription and processing method, an NWDAF, and a storage medium, so as to prevent the occurrence of the unnecessary system overhead when the aggregator NWDAF cooperates with the plurality of NWDAFs.

The present disclosure provides the following technical solutions.

In one aspect, the present disclosure provides in some embodiments a subscription method, including: sending, by a aggregator NWDAF, a subscription request to a first NWDAF (NWDAF1), the NWDAF1 being an NWDAF whose serving area covers a current location of a User Equipment (UE); upon the receipt of a notification that the UE has moved out of the serving area of the NWDAF1, determining, by the aggregator NWDAF, a SGC network function currently serving the UE and determining a second NWDAF (NWDAF2) which is capable of serving the 5GC network function, or determining a location of the UE and querying the NWDAF2 which is capable of serving the UE in accordance with the location of the UE; and sending, by the aggregator NWDAF, a subscription request to the NWDAF2.

In some possible embodiments of the present disclosure, subsequent to sending, by the aggregator NWDAF, the subscription request to the NWDAF2, the subscription method further includes sending a suspending or deregistration indication to the NWDAF1.

In some possible embodiments of the present disclosure, the subscription method further includes receiving, by the aggregator NWDAF, a data analytics result from a third NWDAF (NWDAF3), and the data analytics result is a historical data analytics about the UE.

In some possible embodiments of the present disclosure, the notification received by the aggregator NWDAF and indicating that the UE has moved out of the serving area of the NWDAF1 is sent by the NWDAF1 when the NWDAF1 determines that the UE has moved out of the serving area in accordance with an event reported by an NF serving the UE.

In some possible embodiments of the present disclosure, the determining the location of the UE includes obtaining the location of the UE from the NWDAF1 or subscribing location information about the UE to an AMF.

In another aspect, the present disclosure provides in some embodiments a subscription processing method, including: upon the receipt of a subscription request from an aggregator NWDAF, subscribing, by an NWDAF, information about a 5GC NF currently serving a UE to a Unified Data Management (UDM); receiving, by the NWDAF, a notification indicating the 5GC NF serving the UE from the UDM; and determining, by the NWDAF, whether to perform data analytics in accordance with whether the 5GC NF is located within its serving area, and/or notifying, by the NWDAF, the aggregator NWDAF when the UE has moved out of the serving area.

In some possible embodiments of the present disclosure, the determining, by the NWDAF, whether to perform the data analytics in accordance with whether the 5GC NF is located within its serving area includes: when the 5GC NF is not located within the serving area, stopping, by the NWDAF which is currently performing the data analytics, data collection and analytics with respect to the UE; or when the 5GC NF is located within the serving area, starting, by an NWDAF which is currently not performing the data analytics, the data collection and analytics with respect to the UE.

In some possible embodiments of the present disclosure, the NWDAF determines whether the UE has moved out of its serving area in accordance with a notification from the UDM.

In some possible embodiments of the present disclosure, subsequent to receiving, by the NWDAF, the subscription request from the aggregator NWDAF, the subscription processing method further includes, upon the receipt of a suspending indication from the aggregator NWDAF, suspending the data collection and analytics with respect to the UE.

In some possible embodiments of the present disclosure, subsequent to determining, by the NWDAF, that the UE has moved out of its serving area, the subscription processing method further includes, when there is historical data analytics about the UE, sending data analytics result to the aggregator NWDAF.

In yet another aspect, the present disclosure provides in some embodiments an NWDAF, which is an aggregator NWDAF including a processor, a memory and a transceiver. The processor is configured to read a program stored in the memory so as to: send a subscription request to an NWDAF 1, the NWDAF 1 being an NWDAF whose serving area covers a current location of a UE; upon the receipt of a notification that the UE has moved out of the serving area of the NWDAF1, determine a 5GC network function currently serving the UE and determine an NWDAF2 which is capable of serving the 5GC network function, or determine a location of the UE and query the NWDAF2 which is capable of serving the UE in accordance with the location of the UE; and send a subscription request to the NWDAF2. The transceiver is configured to receive and transmit data under the control of the processor.

In some possible embodiments of the present disclosure, subsequent to sending the subscription request to the NWDAF2, the processor is further configured to transmit a suspending or deregistration indication to the NWD AF 1.

In some possible embodiments of the present disclosure, the processor is further configured to receive a data analytics result from a third NWDAF (NWDAF3), and the data analytics result is historical data analytics about the UE.

In some possible embodiments of the present disclosure, the notification indicating that the UE has moved out of the serving area of the NWDAF 1 is sent by the NWDAF 1 when the NWDAF1 determines that the UE has moved out of the serving area in accordance with an event reported by an NF serving the UE.

In some possible embodiments of the present disclosure, the processor is further configured to obtain the location of the UE from the NWDAF1 or subscribe location information about the UE to an AMF.

In still yet another aspect, the present disclosure provides in some embodiments an NWDAF, which is an NWDAF including a processor, a memory and a transceiver. The processor is configured to read a program in the memory, so as to: upon the receipt of a subscription request from an aggregator NWDAF, subscribe information about a 5GC NF currently serving a UE to a UDM; receive a notification indicating the 5GC NF serving the UE from the UDM; and determine whether to perform data analytics in accordance with whether the 5GC NF is located within a serving area of the NWDAF, and/or notify the aggregator NWDAF when the UE has moved out of the serving area. The transceiver is configured to receive and transmit data under the control of the processor.

In some possible embodiments of the present disclosure, when determining whether to perform the data analytics in accordance with whether the 5GC NF is located within the serving area, the processor is further configured to: when the 5GC NF is not located within the serving area, enable the NWDAF which is currently performing the data analytics to stop data collection and analytics with respect to the UE; or when the 5GC NF is located within the serving area, enable an NWDAF which is currently not performing the data analytics to perform the data collection and analytics with respect to the UE.

In some possible embodiments of the present disclosure, whether the UE has moved out of the serving area is determined in accordance with a notification from the UDM.

In some possible embodiments of the present disclosure, subsequent to receiving the subscription request from the aggregator NWDAF, the processor is further configured to, upon the receipt of a suspending indication from the aggregator NWDAF, suspend the data collection and analytics with respect to the UE.

In some possible embodiments of the present disclosure, after the UE has moved out of the serving area, the processor is further configured to, when there is historical data analytics about the UE, transmit a data analytics result to the aggregator NWDAF.

In still yet another aspect, the present disclosure provides in some embodiments a subscription device, including: an aggregator NWDAF subscription module configured to send a subscription request to an NWDAF1, the NWDAF1 being an NWDAF whose serving area covers a current location of a UE; and an aggregator NWDAF determination module configured to, upon the receipt of a notification that the UE has moved out of the serving area of the NWDAF1, determine a 5GC network function currently serving the UE and determine a NWDAF2 which is capable of serving the 5GC network function, or determine a location of the UE and query the NWDAF2 which is capable of serving the UE in accordance with the location of the UE. The aggregator NWDAF subscription module is further configured to send a subscription request to the NWDAF2.

In still yet another aspect, the present disclosure provides in some embodiments a subscription processing device, including: an NWDAF subscription module configured to, upon the receipt of a subscription request from an aggregator NWDAF, subscribe information about a 5GC NF currently serving a UE to a UDM; an NWDAF reception module configured to receive a notification indicating the 5GC NF serving the UE from the UDM; and an NWDAF processing module configured to determine whether to perform data analytics in accordance with whether the 5GC NF is located within its serving area, and/or notify the aggregator NWDAF when the UE has moved out of the serving area.

In still yet another aspect, the present disclosure provides in some embodiments a computer-readable storage medium storing therein a computer program for implementing the above-mentioned subscription method and/or subscription processing method.

The present disclosure has the following beneficial effects.

According to the embodiments of the present disclosure, upon the receipt of the notification that the UE has moved out of the serving area of the NWDAF1, the aggregator NWDAF determines the current 5GC NF serving the UE, and determines the NWDAF2 associated with the 5GC NF. Alternatively, upon the receipt of the notification that the UE has moved out of the serving area of the NWDAF1, the aggregator NWDAF determines the location of the UE, and queries the NWDAF2 which is capable of serving the UE in accordance with the location of the UE. Then, the aggregator NWDAF sends the subscription request to the NWDAF2.

The NWDAF determines whether to perform the data analytics in accordance with whether the 5G NF is located in its serving area, and/or notifies the aggregator NWDAF after the UE has moved out of its serving area.

As a result, it is unnecessary for the NWDAF to perform the data collection and analytics with respect to the UE and report the analytics result to the aggregator NWDAF when the UE is currently not located in its serving area, thereby to increase an analytic capacity of the NWDAF. In addition, when the NWDAF needs to be changed due to the movement of the UE, it is able to rapidly trigger a new NWDAF to perform the data collection and analytics on the target UE, thereby to improve the timeliness of the data analytics.

### BRIEF DESCRIPTION OF THE DRAWINGS

The following drawings are provided to facilitate the understanding of the present disclosure, and constitute a portion of the description. These drawings and the following embodiments are for illustrative purposes only, but shall not be construed as limiting the present disclosure. In these drawings,
FIG. 1 is a schematic view showing network architecture supporting a hierarchical NWDAF in the related art;
FIG. 2 is a flow chart of a multi-NWDAF coordinate procedure based on information registration in the related art;
FIG. 3 is a schematic view showing a multi-level NWDAF structure according to one embodiment of the present disclosure;
FIG. 4 is a flow chart of a subscription method at an aggregator NWDAF side according to one embodiment of the present disclosure;
FIG. 5 is a flow chart of a subscription processing method at a distributed NWDAF side according to one embodiment of the present disclosure;
FIG. 6 is a flow chart of subscription processing according to a first embodiment of the present disclosure;
FIG. 7 is a flow chart of subscription processing according to a second embodiment of the present disclosure;
FIG. 8 is a flow chart of subscription processing according to a third embodiment of the present disclosure;
FIG. 9 is a flow chart of subscription processing according to a fourth embodiment of the present disclosure;
FIG. 10 is a flow chart of subscription processing according to a fifth embodiment of the present disclosure;
FIG. 11 is a flow chart of subscription processing according to a sixth embodiment of the present disclosure;
FIG. 12 is a schematic view showing an NWDAF according to one embodiment of the present disclosure; and
FIG. 13 is another schematic view showing the NWDAF according to one embodiment of the present disclosure.

### DETAILED DESCRIPTION

It is found through researches that, in an Enablers for Network Automation (eNA) project, architecture of multiple levels of NWDAFs is introduced in a 5GC, and NWDAF modules are built in some NFs, i.e., the NF and the NWDAF are provided together. In this environment, an aggregator NWDAF for receiving an analytics request needs to define a data analytics result for a plurality of distributed NWDAFs. For example, UE mobility-related analytics within a designated range needs to be provided by an NWDAF arranged together with a plurality of Access and Mobility Management Functions (AMFs). For some UE-related data, e.g., abnormal behavior analytics, the NWDAF needs to monitor a behavior of the UE for a long time period, so the aggregator NWDAF needs to maintain data analytics subscription to a plurality of NWDAFs.

However, at a same time point, the UE is merely served by one NWDAF, and when the aggregator NWDAF subscribes to the plurality of NWDAFs for the UE-related analytics, an unnecessary system overhead occurs, e.g., the NWDAF which does not serve the UE also needs to maintain to report the UE-related analytics.

In other words, in the related art, the aggregator NWDAF always maintains to subscribe to the NWDAF in a designated region for the data analytics, so there exist at least one of the following drawbacks.
1. The NWDAF which currently does not serve the UE also receives an analytic subscription request from the aggregator NWDAF, so it is necessary to maintain to perform the data analytics with respect to the UE and report an analytics result to the aggregator NWDAF.
2. When the NWDAF serving the UE is changed due to the movement of the UE, it is impossible for a new NWDAF to rapidly trigger the data collection and analytics with respect to a target UE.

Based on the above, an object of the present disclosure is to provide a scheme for defining, by the aggregator NWDAF, a UE-related data analytics result from the NWDAF, thereby to prevent the establishment of an unnecessary data subscription relationship between the aggregator NWDAF and the NWDAF.

The following description will be given in conjunction with the drawings.

The following description will be given from an aggregator NWDAF side and a distributed NWDAF side respectively. In addition, a cooperative instance is provided so as to facilitate the understanding of the schemes in the embodiments of the present disclosure. However, it does not mean that the schemes must be implemented cooperatively or separately. In actual use, when the schemes are implemented by the terminal and the base station separately, it is also able to solve problems at the terminal side and the base station side. When the schemes are adopted cooperatively, it is able to achieve a better effect.

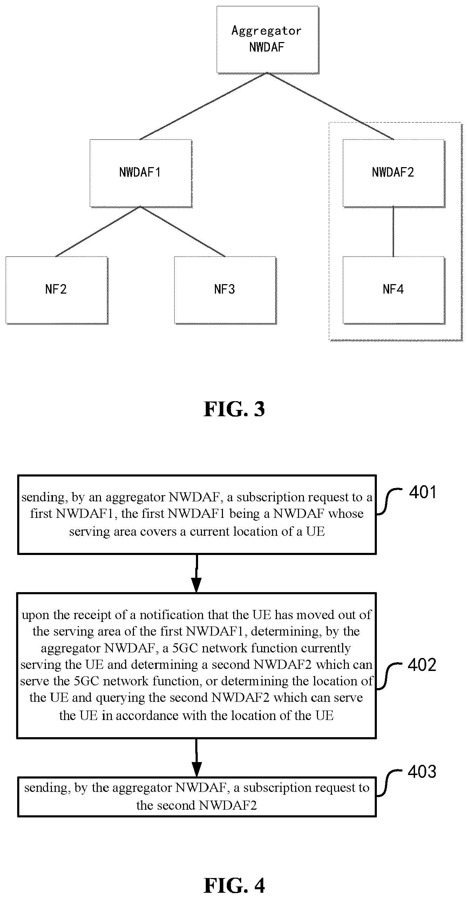

FIG. 3 shows a multi-level NWDAF structure, and the following schemes may be implemented at least in the multi-level NWDAF structure in FIG. 3.

As shown in FIG. 4, the present disclosure provides in some embodiments a subscription method at an aggregator NWDAF side, which includes: Step 401 of sending, by an aggregator NWDAF, a subscription request to an NWDAF 1, the NWDAF 1 being an NWDAF whose serving area covers a current location of a User Equipment (UE); Step 402 of, upon the receipt of a notification that the UE has moved out of the serving area of the NWDAF1, determining, by the aggregator NWDAF, a 5GC network function currently serving the UE and determining a NWDAF2 which is capable of serving the 5GC network function, or determining a location of the UE and querying the NWDAF2 which is capable of serving the UE in accordance with the location of the UE; and Step 403 of sending, by the aggregator NWDAF, a subscription request to the NWDAF2.

The aggregator NWDAF sends an NF query request to an NRF, and the query request carries location information about the UE, so as to query the NWDAF2 serving the UE.

During the implementation, subsequent to sending, by the aggregator NWDAF, the subscription request to the NWDAF2, the subscription method further includes sending a suspending or deregistration indication to the NWD AF 1.

During the implementation, the subscription method further includes receiving, by the aggregator NWDAF, a data analytics result from a third NWDAF (NWDAF3), and the data analytics result is historical data analytics about the UE.

To be specific, it is impossible for the NWDAF3 to perform the data analytics because the UE is not in its serving area, but there is the historical data analytics about the UE.

During the implementation, the notification received by the aggregator NWDAF and indicating that the UE has moved out of the serving area of the NWDAF 1 is sent by the NWDAF1 when the NWDAF1 determines that the UE has moved out of the serving area in accordance with an event reported by an NF serving the UE.

To be specific, the determining, by the aggregator NWDAF, the location of the UE includes obtaining the location of the UE from the NWDAF1 or subscribing location information about the UE to an AMF.

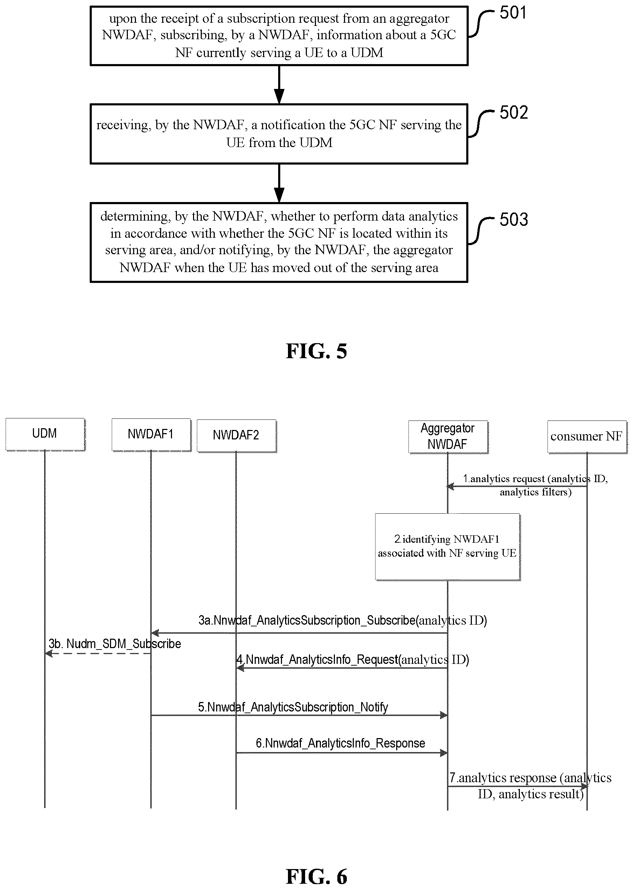

As shown in FIG. 5, the present disclosure further provides in some embodiments a subscription processing method at a distributed NWDAF side, which includes: Step 501 of, upon the receipt of a subscription request from an aggregator NWDAF, subscribing, by an NWDAF, information about a 5GC NF currently serving a UE to a UDM; Step 502 of receiving, by the NWDAF, a notification indicating the 5GC NF serving the UE from the UDM; and Step 503 of determining, by the NWDAF, whether to perform data analytics in accordance with whether the 5GC NF is located within its serving area, and/or notifying, by the distributed NWDAF, the aggregator NWDAF when the UE has moved out of the serving area.

The notifying, by the NWDAF, the aggregator NWDAF after the UE has moved out of the service will be described hereinafter in a first scheme, and the determining, by the NWDAF, whether to perform the data analytics in accordance with whether the 5GC NF is in the serving area will be described hereinafter in a second scheme.

During the implementation, the determining, by the NWDAF, whether to perform the data analytics in accordance with whether the 5GC NF is located within its serving area includes: when the 5GC NF is not located within the serving area, stopping, by the NWDAF which is currently performing the data analytics, data collection and analytics with respect to the UE; or when the 5GC NF is located within the serving area, starting, by an NWDAF which is currently not performing the data analytics, the data collection and analytics with respect to the UE.

During the implementation, the NWDAF determines whether the UE has moved out of its serving area in accordance with a notification from the UDM.

During the implementation, subsequent to receiving, by the NWDAF, the subscription request from the aggregator NWDAF, the subscription processing method further includes, upon the receipt of a suspending indication from the aggregator NWDAF, suspending the data collection and analytics with respect to the UE.

During the implementation, subsequent to determining, by the NWDAF, that the UE has moved out of its serving area, the subscription processing method further includes, when there is historical data analytics about the UE, sending a data analytics result to the aggregator NWDAF.

### First scheme

1. The aggregator NWDAF sends the subscription request to the NWDAF1, and the NWDAF1 is an NWDAF whose serving area covers the current location of the UE.

Upon the receipt of the notification that the UE has moved out of the serving area of the NWDAF1, the aggregator NWDAF queries the 5GC NF currently serving the UE, and determines the NWDAF2 which can serve the 5GC NF. The NWDAF 1 determines that the UE has moved out of its serving area in accordance with a notification from the UDM.

The aggregator NWDAF sends the subscription request to the NWDAF2.

To be specific, (1) the aggregator NWDAF receives an analytics request from a consumer NF, and a filtration condition carried in the analytics request includes an area of interest. The aggregator NWDAF queries an NRF in accordance with the area of interest to obtain a list of NWDAFs currently serving the area of interest, and queries the UDM in accordance with an UE ID to obtain an AMF or a Session Management Function (SMF) currently serving the UE.

(2) When the aggregator NWDAF finds there is an NWDAF for providing services in the AMF or SMF which serves the UE and the NWDAF is included in the list of NWDAFs, the aggregator NWDAF sends the subscription request to the NWDAF. In addition, the aggregator NWDAF sends one query request to the other NWADFs in the list or indicates the other NWDAFs to pause the data analytics.

(3) When the UE has moved out of the serving area of the current NWDAF, the NWDAF notifies the aggregator NWDAF to stop the analytics on the UE.

(4) The aggregator NWDAF queries the UDM again to obtain an SMF or AMF serving the UE. Identical to (2), when there is a d-NWADF for providing services in the AMF or SMF which serves the UE and the NWDAF is included in the list of NWDAFs, the aggregator NWDAF sends the subscription request to the NWDAF.

### First Embodiment

In this embodiment, the aggregator NWDAF sends a data analytics subscription request to a designated NWDAF in accordance with a request from a consumer NF.

FIG. 6 shows a subscription processing procedure according to the first embodiment of the present disclosure. As shown in FIG. 6, the procedure includes the following steps.
1. The aggregator NWDAF receives an analytics request from the consumer NF, the analytics request carries an analytics ID and a filtration condition, and the filtration condition includes an area of interest, a UE ID, etc. The aggregator NWDAF queries an NRF in accordance with the area of interest to obtain a list of NWDAFs currently serving the area, and queries a UDM in accordance with a UE ID to obtain a 5GC NF (AMF or SMF) currently serving the UE. The implementation thereof is known in the related art.
2. The aggregator NWDAF determines an NWDAF associated with the 5GC NF (AMF/SMF) currently which is capable of serving the UE in accordance with the 5GC NF, and identifies the NWDAF as a serving NWDAF. The implementation thereof is known in the related art.
3. The aggregator NWDAF sends Nnwdaf_AnalyticsSubscription_Subscribe to the serving NWDAF to subscribe a data analytics result, and requests the NWDAF to provide the data analytics result indicated by an analytics ID in a designated region (an intersection between the area of interest and the NWDAF). The NWDAF uses Nudm_Subscription Data Management (SDM)_Subscribe to subscribe information about the 5GC NF currently serving the UE to the UDM in accordance with the UE ID.
4. The aggregator NWDAF sends Nnwdaf_AnalyticsInfo_Request to the other NWDAF in the list, so as to request the NWDAF to provide a historical data analytics result indicated by the analytics ID in the designated region (the intersection between the area of interest and the NWDAF) at once.
5. The serving NWDAF performs data collection and data analytics, and then sends Nnwdaf_AnalyticsSubscription_Notify to the aggregator NWDAF.
6. The other NWDAF determines that the UE is not located in its serving area, so it is impossible to perform the data analytics. However, when there is the historical data analytics about the UE and the filtration condition in the data analytics request has been met, the NWDAF may provide the data analytics result in Nnwdaf_AnalyticsInfo_Response sent to the aggregator NWDAF.
7. The aggregator NWDAF generates an analytics response to be sent to the consumer NF in accordance with the data analytics result from the NWDAF, and the analytics response carries the analytics ID and he analytics result.

### Second Embodiment

In this embodiment, the aggregator NWDAF sends a data analytics suspending request to the NWDAF in accordance with a request from the consumer NF.

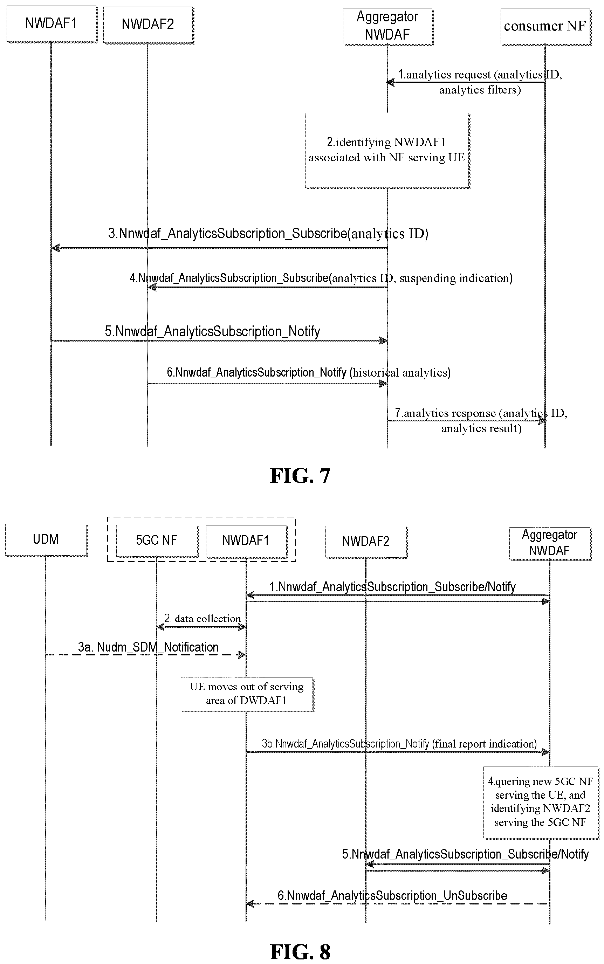

FIG. 7 shows a subscription processing procedure according to the second embodiment of the present disclosure. As shown in FIG. 7, the procedure includes the following steps.

1-2 may refer to those in the first embodiment.
1. The aggregator NWDAF receives an analytics request from the consumer NF, the analytics request carries therein an analytics ID and a filtration condition, and the filtration condition includes an area of interest, a UE ID, etc. The aggregator NWDAF queries an NRF in accordance with the area of interest to obtain a list of NWDAFs currently serving the area, and queries a UDM in accordance with a UE ID to obtain a 5GC NF (AMF or SMF) currently serving the UE. The implementation thereof is known in the related art.
2. The aggregator NWDAF determines an NWDAF associated with the 5GC NF (AMF/SMF) currently which is capable of serving the UE in accordance with the 5GC NF, and identifies the NWDAF as a serving NWDAF. The implementation thereof is known in the related art.
3. The aggregator NWDAF sends Nnwdaf_AnalyticsSubscription_Subscribe to the serving NWDAF to subscribe a data analytics result, and requests the NWDAF to provide the data analytics result indicated by an analytics ID in a designated region (an intersection between the area of interest and the NWDAF).
4. The aggregator NWDAF does not transmit Nnwdaf_AnalyticsSubscription_Subscribe to the other NWDAFs in the list to subscribe the data analytics result, but sends a suspending indication to these NWDAFs so that it is unnecessary for these NWDAFs to perform data collection and data analytics.
   Here, when the NWDAF sends the subscription request to the initially-determined NWDAF associated with the 5GC NF serving the UE, the aggregator NWDAF sends the suspending indication to the other NWDAFs.
5. The serving NWDAF performs the data collection and data analytics, and then sends the data analytics result to the aggregator NWDAF.
6. The other NWDAF does not perform the data analytics temporarily. However, when there is the historical data analytics about the UE and the filtration condition in the data analytics request has been met, the NWDAF reports the historical data analytics result of the UE to the aggregator NWDAF.
7. The aggregator NWDAF generates the data analytics result to the consumer NF in accordance with the data analytics result from the NWDAF.

### Third Embodiment

In this embodiment, the current NWDAF notifies the aggregator NWDAF after the UE has moved out of the serving area of the NWDAF.

FIG. 8 shows a subscription processing procedure according to the third embodiment of the present disclosure. As shown in FIG. 8, the procedure includes the following steps.
1-2. The aggregator NWDAF requests a data analytics result of the UE from a serving NWDAF through Nnwdaf_AnalyticsSubscription_Subscribe/Notify, so an NWDAF1 performs data collection and data analytics. The implementation thereof is known in the related art.
3. When the UE has moved out of the serving area of the serving NWDAF1, the serving NWDAF needs to transmit a report to the aggregator NWDAF. The serving NWDAF determines that the UE has moved out of the serving area of the NWDAF 1 in accordance with the 5GC NF information in Nudm_SDM_Notification from the UEDM or an event report about the 5GC NF in a data collection report. When the serving NWDAF sends the report to the aggregator NWDAF, it needs to provide an indication to the aggregator NWDAF. For example, the indication includes an indication indicating that the UE has moved out of the serving area or Nnwdaf_AnalyticsSubscription_Notify (final report indication).
4. Upon the receipt of the indication from the serving NWDAF, the aggregator NWDAF queries the 5GC NF (AMF/SMF) currently serving the UE in the UDM again, and then determines an NWDAF2 serving the 5GC NF in accordance with the 5GC NF information.
5. The aggregator NWDAF sends Nnwdaf_AnalyticsSubscription_Subscribe/Notify to the new serving NWDAF2, so as to trigger the NWDAF2 to perform the data collection and data analytics with respect to the UE.
6. The aggregator NWDAF sends Nnwdaf_ AnalyticsSubscription _UnSubscribe to the source serving NWDAF1.

### Fourth Embodiment

In this embodiment, the current NWDAF notifies the aggregator NWDAF after the UE has moved out of the serving area of the current NWDAF.

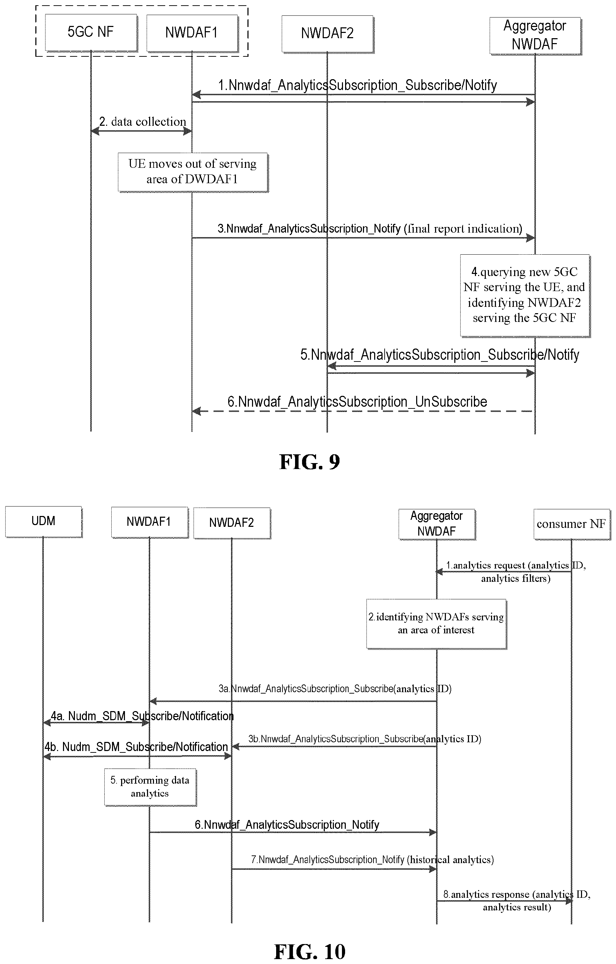

FIG. 9 shows a subscription processing procedure according to the fourth embodiment of the present disclosure. As shown in FIG. 9, the procedure includes the following steps.
1-2. The aggregator NWDAF requests a data analytics result of the UE from a serving NWDAF through Nnwdaf_AnalyticsSubscription_Subscribe/Notify, so an NWDAF1 performs data collection and data analytics. The implementation thereof is known in the related art.
3. When the UE has moved out of the serving area of the serving NWDAF1, the serving NWDAF needs to transmit a report to the aggregator NWDAF. The serving NWDAF determines that the UE has moved out of the serving area of the serving NWDAF in accordance with an event report about the 5GC NF in a data collection report. When the serving NWDAF sends the report to the aggregator NWDAF, it needs to provide an indication to the aggregator NWDAF. For example, the indication includes an indication indicating that the UE has moved out the serving area or Nnwdaf_AnalyticsSubscription_Notify (final report indication).
4. Upon the receipt of the indication from the serving NWDAF, the aggregator NWDAF queries the 5GC NF (AMF/SMF) currently serving the UE in the UDM again, and then determines an NWDAF2 serving the 5GC NF in accordance with the 5GC NF information (Query new 5GC NF serving the UE, and identify NWDAF2 serving the 5GC NF).
5. The aggregator NWDAF sends Nnwdaf_AnalyticsSubscription_Subscribe/Notify to the new serving NWDAF2, so as to trigger the NWDAF2 to perform the data collection and data analytics with respect to the UE.
6. The aggregator NWDAF sends Nnwdaf_ AnalyticsSubscription _UnSubscribe to the source serving NWDAF1.

### Second scheme

Upon the receipt of the subscription request from the aggregator NWDAF, the NWDAF subscribes the information about the 5GC NF currently serving the UE to the UDM. The NWDAF receives a notification about the 5G NF serving the UE from the UDM. When the 5GC NF is not located within the serving area, the NWDAF which is currently performing the data analytics stops the data collection and analytics with respect to the UE, or when the 5GC NF is located within the serving area, an NWDAF which is currently not performing the data analytics starts to perform the data collection and analytics with respect to the UE.

To be specific, (1) the aggregator NWDAF receives an analytics request from a consumer NF, and a filtration condition carried in the analytics request includes an area of interest. The aggregator NWDAF queries an NRF in accordance with the area of interest to obtain a list of NWDAFs currently serving the area of interest.

(2) The aggregator NWDAF sends the data analytics subscription request to the NWDAF, and the NWDAF subscribes the information about the 5GC NF (AMF/AMF) serving the UE to the UDM in accordance with the request.

(3) Upon the receipt of a notification from the UDM indicating that the 5GC NF is not located within its serving area, the NWDAF does not perform the data analytics with respect to the UE. When there is available historical data analytics with respect to the UE, the NWDAF merely sends the historical analytics to the aggregator NWDAF, otherwise, it performs the data analytics and sends a report to the aggregator NWDAF.

4. When the UE has moved out of the serving area of the current 5GC NF, the UDM sends a notification to each NWDAF subscribing the information about the 5GC NF serving the UE, and the above step 3 is performed by each NWDAF again.

### Fifth Embodiment

In this embodiment, the NWDAF queries the 5GC NF serving the UE from the UDM, and determines whether to perform the data analytics.

FIG. 10 shows a subscription processing procedure according to the fifth embodiment of the present disclosure. As shown in FIG. 10, the procedure includes the following steps.
1-2. The aggregator NWDAF receives an analytics request (analytics ID and analytics filters) from the consumer NF, and the analytics request carries the analytics ID and the filtration condition, and the filtration condition includes an area of interest, a UE ID, etc. The aggregator NWDAF queries the NRF in accordance with the area of interest to obtain a list of NWDAFs currently serving the area. The implementation thereof is known in the related art.
3. The aggregator NWDAF subscribes the data analytics result with respect to the UE to each NWDAF in the list through Nnwdaf_ AnalyticsSubscription_Subscribe (Analytics ID). The implementation thereof is known in the related art.
4. The NWDAF which has received the data analytics subscription request sends a request to the UDM in accordance with the UE ID, so as to subscribe information about the 5GC NF currently serving the UE through Nudm_SDM_Subscribe/Notification. The NWDAF determines the information about the 5GC NF to be requested from the UDM in accordance with the analytics ID. For example, when the analytics ID indicates UE mobility analytics, the NWDAF determines that a target 5GC NF is the AMF, and when the analytics ID indicates abnormal behavior analytics, the NWDAF determines that the target 5GC NF is the AMF and the SMF.

The UDM sends the information about the 5GC NF serving the UE to the 5GC NF in accordance with the subscription request, and once the AMF serving the UE changes subsequently, the UDM will notify it to the NWDAFs again.

5-6. When the 5GC NF currently serving the UE is associated with the NWDAF, the NWDAF determines whether the UE is located within the serving area, so as to perform the data collection and data analytics with respect to the UE. After the data analytics, the NWDAF reports the analytics result to the aggregator NWDAF through Nnwdaf_AnalyticsSubscription_Notify.

7. When the 5GC NF currently serving the UE is not located within the serving area, the NWDAF does not perform the data collection data analytics with respect to the UE. When there is historical data analytics about the UE in the NWDAF, the NWDAF merely reports the historical analytics result to the aggregator NWDAF through Nnwdaf_AnalyticsSubscription_Notify (historical analytics).

8. The aggregator NWDAF generates an analytics response (analytics ID, analytics result) for the consumer NF in accordance with the data analytics result from the NWDAF.

### Sixth Embodiment

In this embodiment, the NWDAF for performing the data analytics changes due to a change in the SGC NF.

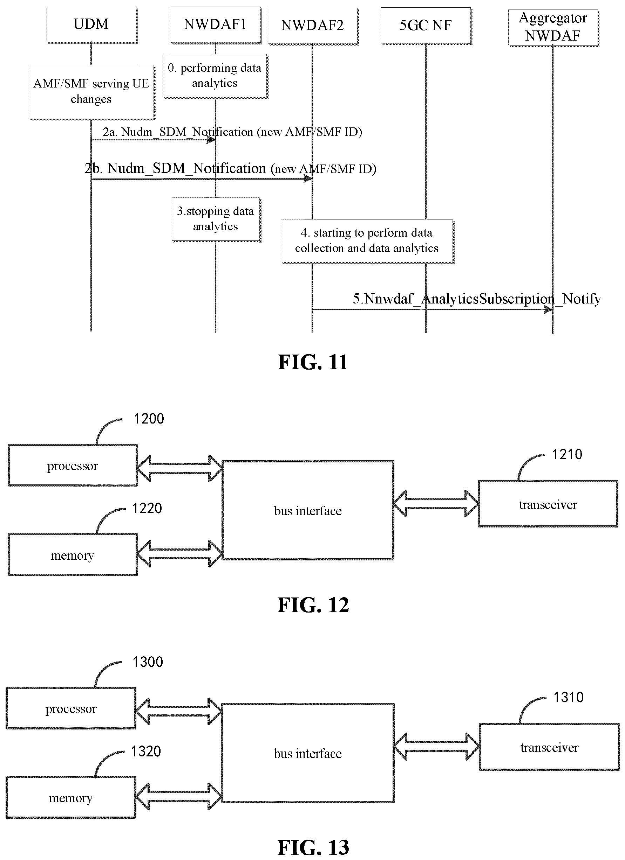

FIG. 11 shows a subscription processing procedure according to the sixth embodiment of the present disclosure. As shown in FIG. 11, the procedure includes the following steps.
0. The NWDAF1 is currently performing the data analytics on the UE (executing data analytics).
1. The UE moves out of the serving area of the current 5GC NF, so the 5GC NF serving the UE changes, e.g., the AMF or SMF serving the UE changes. A new 5GC NF serving the UE is registered to the UDM. The implementation thereof is known in the related art.
2. Upon the receipt of the registration of the new 5GC NF serving the UE, the UDM sends a notification Nudm_SDM_Notification (new AMF/SMF ID) indicating that the 5GC NF serving the UE changes to a relevant NWDAF in accordance with the subscription request from each NWDAF.
3. Upon the receipt of information about the new 5GC NF serving the UE, the current serving NWDAF 1 determines whether the 5GC NF is associated with the NWDAF1. When the 5GC NF is associated with the NWDAF1, the NWDAF 1 continues to collect data from the new 5GC NF and performs the data analytics. When the 5GC NF is not associated with the NWDAF1, the NWDAF1 stops the data collection and data analytics.
4. Upon the receipt of the information about the new 5GC NF serving the UE, the other NWDAF determines whether the 5GC NF is associated with the NWDAF. When the 5GC NF is associated with the NWDAF, the NWDAF starts to collect data from the new 5GC NF and perform the data analytics. When the 5GC NF is not associated with the NWDAF, the NWDAF does not perform the data collection and data analytics.
5. The new serving NWDAF2 provides the data analytics result to the aggregator NWDAF through Nnwdaf_AnalyticsSubscription_Notify.

Based on a same inventive concept, the present disclosure further provides in some embodiments an NWDAF, a subscription device, a subscription processing device, and a computer-readable storage medium. A principle of these devices for solving the problem is similar to that of the subscription method and the subscription processing method, so the implementation of the devices may refer to those of the methods, which will not be particularly defined herein.

The technical solutions in the embodiments of the present disclosure will be implemented as follows.

As shown in FIG. 12, the present disclosure further provides in some embodiments an NWDAF which is an aggregator NWDAF including a processor 1200, a memory 1220 and a transceiver 1210. The processor 1200 is configured to read a program in the memory 1220, so as to: send a subscription request to an NWDAF1, the NWDAF1 being an NWDAF whose serving area covers a current location of a UE; upon the receipt of a notification that the UE has moved out of the serving area of the NWDAF1, determine a 5GC network function currently serving the UE and determine an NWDAF2 which is capable of serving the 5GC network function, or determine a location of the UE and query the NWDAF2 which is capable of serving the UE in accordance with the location of the UE; and send a subscription request to the NWDAF2. The transceiver 1210 is configured to receive and transmit data under the control of the processor 1200.

During the implementation, subsequent to sending the subscription request to the NWDAF2, the processor is further configured to transmit a suspending or deregistration indication to the NWDAF1.

During the implementation, the processor is further configured to receive a data analytics result from a third NWDAF (NWDAF3), and the data analytics result is historical data analytics about the UE.

During the implementation, the notification indicating that the UE has moved out of the serving area of the NWDAF1 is sent by the NWDAF1 when the NWDAF1 determines that the UE has moved out of the serving area in accordance with an event reported by an NF serving the UE.

During the implementation, the processor is further configured to obtain the location of the UE from the NWDAF1 or subscribe location information about the UE to an AMF.

In FIG. 12, bus architecture may include a number of buses and bridges connected to each other, so as to connect various circuits for one or more processors 1200 and one or more memories 1220. In addition, as is known in the art, the bus architecture may be used to connect any other circuits, such as a circuit for a peripheral device, a circuit for a voltage stabilizer and a power management circuit. A bus interface may be provided, and the transceiver 1210 may consist of a plurality of elements, i.e., a transmitter and a receiver for communication with any other devices over a transmission medium. The processor 1200 may take charge of managing the bus architecture as well as general processings. The memory 1220 may store therein data for the operation of the processor 1200.

The present disclosure further provides in some embodiments a subscription device, which includes: an aggregator NWDAF subscription module configured to send a subscription request to an NWDAF1, the NWDAF1 being a NWDAF whose serving area covers a current location of a UE; and an aggregator NWDAF determination module configured to, upon the receipt of a notification that the UE has moved out of the serving area of the NWDAF1, determine a 5GC network function currently serving the UE and determine an NWDAF2 which is capable of serving the 5GC network function, or determine a location of the UE and query the NWDAF2 which is capable of serving the UE in accordance with the location of the UE. The aggregator NWDAF subscription module is further configured to send a subscription request to the NWDAF2.

The implementation of the subscription device may refer to that of the subscription method at the aggregator NWDAF side.

For ease of description, the components of the device are divided into various modules or units on the basis of their functions. Of course, during the implementation, the functions of the modules or units may be achieved in one or more pieces of software or hardware.

As shown in FIG. 13, the present disclosure further provides in some embodiments an NWDAF including a processor 1300, a memory 1320 and a transceiver 1310. The processor 1300 is configured to read a program in the memory 1320, so as to: upon the receipt of a subscription request from an aggregator NWDAF, subscribe information about a 5GC NF currently serving a UE to a UDM; receive a notification indicating the 5GC NF serving the UE from the UDM; and determine whether to perform data analytics in accordance with whether the 5GC NF is located within a serving area of the NWDAF, and/or notify the aggregator NWDAF when the UE has moved out of the serving area. The transceiver 1310 is configured to receive and transmit data under the control of the processor 1300.

During the implementation, when determining whether to perform the data analytics in accordance with whether the 5GC NF is located within the serving area, the processor is further configured to: when the 5GC NF is not located within the serving area, enable the NWDAF which is currently performing the data analytics to stop data collection and analytics with respect to the UE; or when the 5GC NF is located within the serving area, enable an NWDAF which is currently not performing the data analytics to perform the data collection and analytics with respect to the UE.

During the implementation, whether the UE has moved out of the serving area is determined in accordance with a notification from the UDM.

During the implementation, subsequent to receiving the subscription request from the aggregator NWDAF, the processor is further configured to, upon the receipt of a suspending indication from the aggregator NWDAF, suspend the data collection and analytics with respect to the UE.

During the implementation, after the UE has moved out of the serving area, the processor is further configured to, when there is historical data analytics about the UE, transmit a data analytics result to the aggregator NWDAF.

In FIG. 13, bus architecture may include a number of buses and bridges connected to each other, so as to connect various circuits for one or more processors 1300 and one or more memories 1320. In addition, as is known in the art, the bus architecture may be used to connect any other circuits, such as a circuit for a peripheral device, a circuit for a voltage stabilizer and a power management circuit. A bus interface may be provided, and the transceiver 1310 may consist of a plurality of elements, i.e., a transmitter and a receiver for communication with any other devices over a transmission medium. The processor 1300 may take charge of managing the bus architecture as well as general processings. The memory 1320 may store therein data for the operation of the processor 1300.

The present disclosure further provides in some embodiments a subscription processing device, which includes: an NWDAF subscription module configured to, upon the receipt of a subscription request from an aggregator NWDAF, subscribe information about a 5GC NF currently serving a UE to a UDM; an NWDAF reception module configured to receive a notification indicating the 5GC NF serving the UE from the UDM; and an NWDAF processing module configured to determine whether to perform data analytics in accordance with whether the 5GC NF is located within its serving area, and/or notify the aggregator NWDAF when the UE has moved out of the serving area.

The implementation of the subscription processing device may refer to that of the subscription processing method at the distributed NWDAF side.

For ease of description, the components of the device are divided into various modules or units on the basis of their functions. Of course, during the implementation, the functions of the modules or units may be achieved in one or more pieces of software or hardware.

The present disclosure further provides in some embodiments a computer-readable storage medium storing therein a computer program so as to implement the above-mentioned subscription method and/or the above-mentioned subscription processing method.

The implementation of the computer-readable storage medium may refer to that of the subscription method at the aggregator NWDAF side and/or the subscription processing method at the distributed NWDAF side.

In a word, according to the embodiments of the present disclosure, the aggregator NWDAF sends the subscription request to the NWDAF1, and the NWDAF1 is an NWDAF whose serving area covers the current location of the UE. Upon the receipt of the notification indicating that the UE has moved out of the serving area of the NWDAF1, the aggregator NWDAF determines the 5GC network function currently serving the UE and determines the NWDAF2 which is capable of serving the 5GC network function, or determines a location of the UE and queries the NWDAF2 which is capable of serving the UE in accordance with the location of the UE. The NWDAF1 determines that the UE has moved out of its serving area in accordance with the notification from the UDM. The aggregator NWDAF sends the subscription request to the NWDAF2.

Upon the receipt of the subscription request from the aggregator NWDAF, the NWDAF subscribes the information about the 5GC NF currently serving the UE to the UDM. The NWDAF receives the notification indicating the 5GC NF serving the UE from the UDM. When the 5GC NF is not located within the serving area, the NWDAF performing the data analytics stops the data collection and data analytics with respect to the UE. When the 5GC NF is located within the serving area, the NWDAF not performing the data analytics starts to perform the data collection and data analytics with respect to the UE.

As a result, it is unnecessary for the NWDAF to perform the data collection and analytics with respect to the UE and report the analytics result to the aggregator NWDAF when the UE is currently not located in its serving area, thereby to increase an analytic capacity of the NWDAF. In addition, when the NWDAF needs to be changed due to the movement of the UE, it is able to rapidly trigger a new NWDAF to perform the data collection and analytics on the target UE, thereby to improve the timeliness of the data analytics.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, Compact Disc-Read Only Memory (CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be appreciated that, units and steps described in the embodiments of the present disclosure may be implemented in the form of electronic hardware, or a combination of a computer program and the electronic hardware. Whether or not these functions are executed by hardware or software depends on specific applications or design constraints of the technical solution. Different methods may be adopted with respect to the specific applications so as to achieve the described functions, without departing from the scope of the present disclosure.

It should be further appreciated that, for convenience and clarification, operation procedures of the system, device and units described hereinabove may refer to the corresponding procedures in the method embodiment, and thus will not be particularly defined herein.

In the case that the functional units are implemented in a software form and sold or used as a separate product, they may be stored in a computer-readable medium. Based on this, the technical solutions of the present disclosure, partial or full, or parts of the technical solutions of the present disclosure contributing to the related art, may appear in the form of software products, which may be stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be appreciated that, all or parts of the steps in the method may be implemented by related hardware under the control of a computer program. The computer program may be stored in a computer-readable storage medium, and it may be executed so as to implement the steps in the above-mentioned method embodiments. The storage medium may be a magnetic disk, an optical disk, an ROM or an RAM.

It should be appreciated that, the embodiments of the present disclosure may be implemented by hardware, software, firmware, middleware, microcode or a combination thereof. For the hardware implementation, the processor may include one or more of an Application Specific Integrated Circuit (ASIC), a Digital Signal Processor (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure may be implemented through modules capable of achieving the functions in the present disclosure (e.g., processes or functions). Software codes may be stored in the memory and executed by the processor. The memory may be implemented inside or outside the processor.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A subscription method, comprising:
sending, by an aggregator Network Data Analytic Function (aggregator NWDAF), a subscription request to a first NWDAF (NWDAF1), the NWDAF1 being an NWDAF whose serving area covers a current location of a User Equipment (UE);
upon the receipt of a notification that the UE has moved out of the serving area of the NWDAF1, determining, by the aggregator NWDAF, a 5^{th}-Generation (5G) core network (5GC) network function currently serving the UE and determining a second NWDAF (NWDAF2) which is capable of serving the SGC network function, or determining the location of the UE and querying the NWDAF2 which is capable of serving the UE in accordance with the location of the UE; and
sending, by the aggregator NWDAF, a subscription request to the NWDAF2.

2. The subscription method according to claim 1, wherein subsequent to sending, by the aggregator NWDAF, the subscription request to the NWDAF2, the subscription method further comprises sending a suspending or deregistration indication to the NWDAF1.

3. The subscription method according to claim 1, further comprising: receiving, by the aggregator NWDAF, a data analytics result from a third NWDAF (NWDAF3), wherein the data analytics result is a historical data analytics about the UE.

4. The subscription method according to claim 1, wherein the notification received by the aggregator NWDAF and that the UE has moved out of the serving area of the NWDAF 1 is sent by the NWDAF 1 when the NWDAF 1 determines that the UE has moved out of the serving area in accordance with an event reported by a Network Function (NF) serving the UE.

5. The subscription method according to claim 1, wherein the determining the location of the UE comprises obtaining the location of the UE from the NWDAF1 or subscribing location information about the UE to an Access and Mobility Management Function (AMF).

6. A subscription processing method, comprising:
upon the receipt of a subscription request from an aggregator NWDAF, subscribing, by an NWDAF, information about a 5GC NF currently serving a UE to a Unified Data Management (UDM);
receiving, by the NWDAF, a notification that the 5GC NF serves the UE from the UDM; and
determining, by the NWDAF, whether to perform data analytics in accordance with whether the 5GC NF is located within its serving area, and/or notifying, by the NWDAF, the aggregator NWDAF when the UE has moved out of the serving area.

7. The subscription processing method according to claim 6, wherein the determining, by the NWDAF, whether to perform the data analytics in accordance with whether the 5GC NF is located within its serving area comprises: when the 5GC NF is not located within the serving area, stopping, by the NWDAF which is currently performing the data analytics, data collection and analytics with respect to the UE; or when the 5GC NF is located within the serving area, starting, by an NWDAF which is currently not performing the data analytics, the data collection and analytics with respect to the UE.

8. The subscription processing method according to claim 6, wherein the NWDAF determines whether the UE has moved out of its serving area in accordance with a notification from the UDM.

9. The subscription processing method according to claim 6, wherein subsequent to receiving, by the NWDAF, the subscription request from the aggregator NWDAF, the subscription processing method further comprises, upon the receipt of a suspending indication from the aggregator NWDAF, suspending the data collection and analytics with respect to the UE.

10. The subscription processing method according to claim 6, wherein subsequent to determining, by the NWDAF, that the UE has moved out of its serving area, the subscription processing method further comprises, when there is historical data analytics about the UE, sending data analytics result to the aggregator NWDAF.

11. An NWDAF, which is an aggregator NWDAF comprising a processor, a memory and a transceiver,
wherein the processor is configured to read a program stored in the memory so as to: send a subscription request to a first NWDAF (NWDAF1), the NWDAF1 being an NWDAF whose serving area covers a current location of a UE; upon the receipt of a notification that the UE has moved out of the serving area of the NWDAF1, determine a 5GC network function currently serving the UE and determine a second NWDAF (NWDAF2) which is capable of serving the 5GC network function, or determine a location of the UE and query the NWDAF2 which is capable of serving the UE in accordance with the location of the UE; and send a subscription request to the NWDAF2,
wherein the transceiver is configured to receive and transmit data under the control of the processor.

12. The NWDAF according to claim 11, wherein subsequent to sending the subscription request to the NWDAF2, the processor is further configured to transmit a suspending or deregistration indication to the NWDAF1.

13. The NWDAF according to claim 11, wherein the processor is further configured to receive a data analytics result from a third NWDAF (NWDAF3), and the data analytics result is historical data analytics about the UE.

14. The NWDAF according to claim 11, wherein the notification that the UE has moved out of the serving area of the NWDAF1 is sent by the NWDAF1 when the NWDAF1 determines that the UE has moved out of the serving area in accordance with an event reported by an NF serving the UE.

15. The NWDAF according to claim 11, wherein the processor is further configured to obtain the location of the UE from the NWDAF1 or subscribe location information about the UE to an AMF.

16. An NWDAF, which is an NWDAF 1 or NWDAF2 comprising a processor, a memory and a transceiver,
wherein the processor is configured to read a program in the memory, so as to: upon the receipt of a subscription request from an aggregator NWDAF, subscribe information about a 5GC NF currently serving a UE to a UDM; receive a notification that the 5GC NF serves the UE from the UDM; and determine whether to perform data analytics in accordance with whether the 5GC NF is located within a serving area of the NWDAF, and/or notify the aggregator NWDAF when the UE has moved out of the serving area,
wherein the transceiver is configured to receive and transmit data under the control of the processor.

17. The NWDAF according to claim 16, wherein when determining whether to perform the data analytics in accordance with whether the 5GC NF is located within the serving area, the processor is further configured to: when the 5GC NF is not located within the serving area, enable the NWDAF which is currently performing the data analytics to stop data collection and analytics with respect to the UE; or when the 5GC NF is located within the serving area, enable an NWDAF which is currently not performing the data analytics to perform the data collection and analytics with respect to the UE.

18. The NWDAF according to claim 16, wherein whether the UE has moved out of the serving area is determined in accordance with a notification from the UDM.

19. The NWDAF according to claim 16, wherein subsequent to receiving the subscription request from the aggregator NWDAF, the processor is further configured to, upon the receipt of a suspending indication from the aggregator NWDAF, suspend the data collection and analytics with respect to the UE.

20. The NWDAF according to claim 16, wherein after the UE has moved out of the serving area, the processor is further configured to, when there is historical data analytics about the UE, transmit a data analytics result to the aggregator NWDAF.

21. A subscription device, comprising:
an aggregator NWDAF subscription module configured to send a subscription request to a first NWDAF (NWDAF1), the NWDAF1 being an NWDAF whose serving area covers a current location of a UE; and
an aggregator NWDAF determination module configured to, upon the receipt of a notification that the UE has moved out of the serving area of the NWDAF1, determine a 5GC network function currently serving the UE and determine a second NWDAF (NWDAF2) which is capable of serving the 5GC network function, or determine a location of the UE and query the NWDAF2 which is capable of serving the UE in accordance with the location of the UE,
wherein the aggregator NWDAF subscription module is further configured to send a subscription request to the NWDAF2.

22. A subscription processing device, comprising:
an NWDAF subscription module configured to, upon the receipt of a subscription request from an aggregator NWDAF, subscribe information about a 5GC NF currently serving a UE to a UDM;
an NWDAF reception module configured to receive a notification that the 5GC NF serves the UE from the UDM; and
an NWDAF processing module configured to determine whether to perform data analytics in accordance with whether the 5GC NF is located within its serving area, and/or notify the aggregator NWDAF when the UE has moved out of the serving area.

23. A computer-readable storage medium storing therein a computer program so as to implement the method according to any one of claims 1 to 10.
